# EUROPÄISCHE PATENTANMELDUNG

(11) **EP 0 579 896 A1**
(43) Veröffentlichungstag der Anmeldung: **26.01.1994**
(21) Anmeldenummer: 93100758.7
(22) Anmeldetag: 20.01.1993
(51) Int. Cl.: F16K 11/07

(54) **Schieberventildichtung**

(30) Priorität: 22.07.1992 DE 4224180
(71) Anmelder: Firma Carl Freudenberg, D-69469 Weinheim (DE)
(72) Erfinder: Barillas, Gonzalo, W-3570 Stadtallendorf (DE); Schumacher, Herbert, W-6946 Gorxheimertal 40 (DE)

(57) **Zusammenfassung**

Schieberventildichtung (1) zur Abdichtung eines Ventilgehäuses (2) gegenüber einem relativ axial beweglichen Ventilschieber (3), umfassend zumindest einen das Ventilgehäuse (2) abdichtenden ersten Dichtteil (4), zumindest einen den Ventilschieber (1) abdichtenden zweiten Dichtteil (5) und zumindest einen in axialer Richtung vorstehenden Kragen (6), der in radialer Richtung durchbrochen ist, wobei zumindest zwei gleichartige Schieberventildichtungen (1) axial hintereinander geschaltet und über den Kragen (6) aufeinander abgestützt sind. Der erste Dichtteil (4), der zweite Dichtteil (5) und der Kragen (6) sind einstückig ineinander übergehend ausgebildet.

## Beschreibung

Die Erfindung betrifft eine Schieberventildichtung zur Abdichtung eines Ventilgehäuses gegenüber einem relativ axial beweglichen Ventilschieber, umfassend zumindest einen das Ventilgehäuse abdichtenden ersten Dichtteil, zumindest einen den Ventilschieber abdichtenden zweiten Dichtteil und zumindest einen in axialer Richtung vorstehenden Kragen, der in radialer Richtung durchbrochen ist, wobei zumindest zwei gleichartige Schieberventildichtungen axial hintereinander geschaltet und über den Kragen aufeinander abgestützt sind.

Eine derartige Dichtung ist aus der DE-PS 30 02 715 bekannt. Die darin zur Anwendung gelangenden Dichtungsringe sind durch Stützringe abgestützt und gehalten, wobei eine Mehrzahl von Stützringen mit den zugehörigen Dichtungsringen zu einem Dichtungselement verbunden sind. Die das Ventilgehäuse abdichtende, statisch belastete erste Dichtung besteht aus einem O-Ring, der auf einem axialen Vorsprung zwischen dem Stützring und dem Ventilgehäuse angeordnet ist. Die zweite, dynamisch belastete Dichtlippe zur Abdichtung des Ventilschiebers ist in radialer Richtung zwischen dem axialen Vorsprung des Stützringes und dem Ventilschieber angeordnet.

Dabei ist zu beachten, daß die vobekannte Dichtungsanordnung eine Vielzahl von Einzelteilen umfaßt, wodurch diese sowohl in fertigungstechnischer als auch in wirtschaftlicher Hinsicht wenig befriedigend ist. Außerdem kann ein Ausgleich von axialen Toleranzen durch die steif ausgeführten Stützringe nicht erfolgen, so daß eine ausgesprochen genaue Bearbeitung des Ventilgehäuses und/oder des Ventilkolbens erforderlich ist, um eine einwandfreie Funktion des Ventils zu erreichen.

Der Erfindung liegt die Aufgabe zugrunde, eine Schieberventildichtung der vorbekannten Art derart weiterzuentwickeln, daß sie aus weniger Einzelteilen besteht und daher in fertigungstechnischer Hinsicht einfacher herstellbar ist. Außerdem soll die Montage der Dichtung vereinfacht werden und ein Ausgleich von axialen Toleranzen im Einbauraum des Ventilgehäuses gewährleistet sein.

Diese Aufgabe wird erfindungsgemäß mit den kennzeichnenden Merkmalen von Anspruch 1 gelöst. Auf voteilhafte Ausgestaltungen nehmen die Unteransprüche Bezug.

Im Hinblick auf eine kostengünstige, einfache Fertigung und eine problemlose Montage der Schieberventildichtung ist es vorgesehen, daß der erste Dichtteil, der zweite Dichtteil und der Kragen einstückig ineinander übergehend ausgebildet sind. Im Rahmen der vorliegenden Erfindung ist es vorgesehen, daß zumindest der erste und der zweite Dichtteil aus einem elastomeren Werkstoff gebildet sind. Gemäß einer vorteilhaften Ausgestaltung ist es vorgesehen, daß der Kragen, ebenso wie die beiden Dichtteile aus einem elastomeren Werkstoff gebildet ist. Nach einer anderen Ausgestaltung können die beiden Dichtteile aus einem elastomeren Werkstoff gebildet sein und an einen Kragen, der aus einem metallischen, thermoplastischen oder einem duroplastischen Werkstoff besteht, angeformt sein. Toleranzprobleme bei einem kaskadenartigen Einbau mehrerer hintereinander geschalteter Schieberventildichtungen können durch diese einstückige Ausgestaltung vermieden werden. Die Verwendung eines Kragens aus einem sehr harten Werkstoff bedingt eine weniger große Nachgiebigkeit in axialer Richtung, wobei ein Toleranzausgleich durch eine Abstützung des Kragens auf dem elastomeren ersten Dichtteil weiterhin gegeben ist. Die einzelnen Schieberventildichtungen können in axialer Richtung herstellungsbedingt ein Übermaß haben, wobei die gesamte Kaskade bei der Montage in axialer Richtung auf das Fertigmaß zusammengepreßt wird. Sämtliche in der Kaskade enthaltenen Dichtlippen der einzelnen Dichtungen verlagern sich hierbei automatisch in die theoretisch vorher fest bestimmte Position.

Der zweite Dichtteil kann zwei Dichtlippen aufweisen, die in axialer Richtung mit Abstand voneinander benachbart sind und den Ventilschieber unter radialer Vorspannung dichtend umschließen. Die Dichtlippen begrenzen bevorzugt eine trapezförmige Nut, deren Seitenwandungen mit der abzudichtenden Fläche des Ventilschiebers einen Winkel von 10 bis 60° einschließen. Hierbei ist von Vorteil, daß eine zuverlässige Abdichtung des Ventilschiebers in den einzelnen axialen Teilbereichen gewährleistet ist und eine zuverlässige Verbindung der Luftkanäle durch die radialen Ausnehmungen. In der trapezförmig begrenzten Nut zwischen den dynamisch beanspruchten Dichtlippen kann eine Fettfüllung vorgesehen sein, die den betriebsbedingten Verschleiß der Dichtlippen reduziert.

Nach einer anderen Ausgestaltung ist es vorgesehen, daß der zweite Dichtteil nur einen Dichtwulst mit gerundetem Profil aufweist, der den Ventilschieber unter radialer Vorspannung dichtend umschließt. Diese Ausgestaltung bedingt eine relativ vergrößerte Flächenpreßung im Bereich der Abdichtungszone. Diese Ausgestaltung bietet sich bevorzugt dann an, wenn zur Steuerung höhere Drücke im Ventil zur Anwendung gelangen. Zur Abdichtung hoher Drücke ist außerdem die Zwei-Werkstoff-Version mit versteifendem Kragen von Vorteil. Durch den relativ steiferen Kragen kann die axiale Ausdehnung des zweiten Dichtteils reduziert werden, um höhere Durchflußwerte des Ventils zu erreichen.

Der erste Dichtteil kann zumindest zwei radial in Richtung des Ventilgehäuses vorspringende Dichtbereiche aufweisen, die einander axial mit Abstand benachbart zugeordnet sind und das Ventilgehäuse während der bestimmungsgemäßen Verwendung dichtend berühren. Die Dichtbereiche können ein im wesentlichen rechteckig begrenztes Profil aufweisen. Die Abdichtung des Ventilgehäuses ist dadurch während einer langen Gebrauchsdauer zuverlässig gewährleistet.

Ein Ausführungsbeispiel der erfindungsgemäßen Ventilschieberdichtung ist in den als Anlage beigefügten Zeichnungen schematisch dargestellt und im folgenden näher erläutert.
Figur 1 zeigt ein Ausführungsbeispiel der erfindungsgemäßen Schieberventildichtung in geschnittener Darstellung,
Figur 2 zeigt die in Figur 1 dargestellte Schierberventildichtung in einer Seitenansicht und Figur 3 zeigt ein Ausführungsbeispiel einer kaskadenförmigen Anordnung von erfindungsgemäßen Schieberventildichtungen im eingebauten Zustand in einem Ventilgehäuse.

In Figur 4 ist ein Ausführungsbeispiel einer Schieberventildichtung, ähnlich der Dichtung aus Figur 1 gezeigt, wobei der erste und der zweite Dichtteil aus einem elastomeren Werkstoff bestehen und einstückig an einen Kragen aus metallischen Werkstoff angeformt sind.

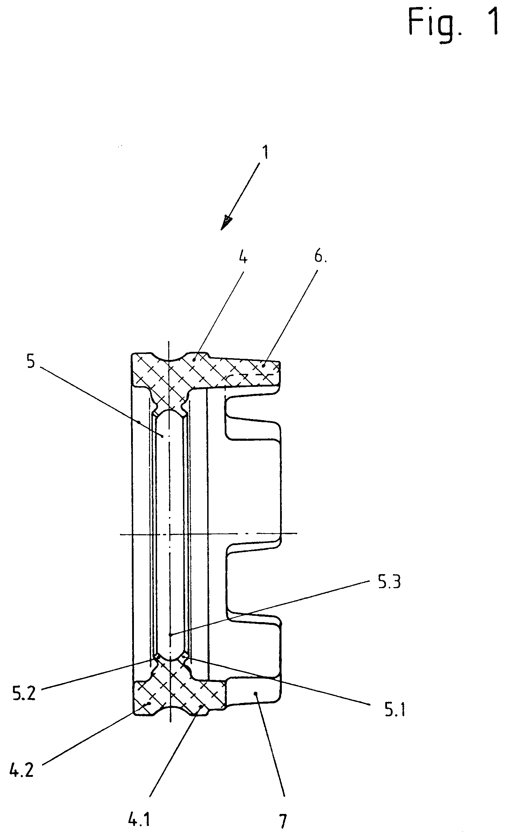

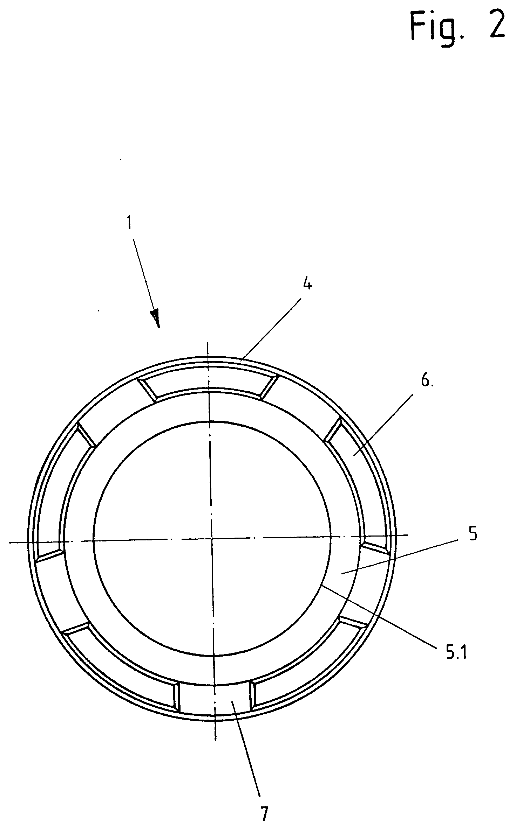

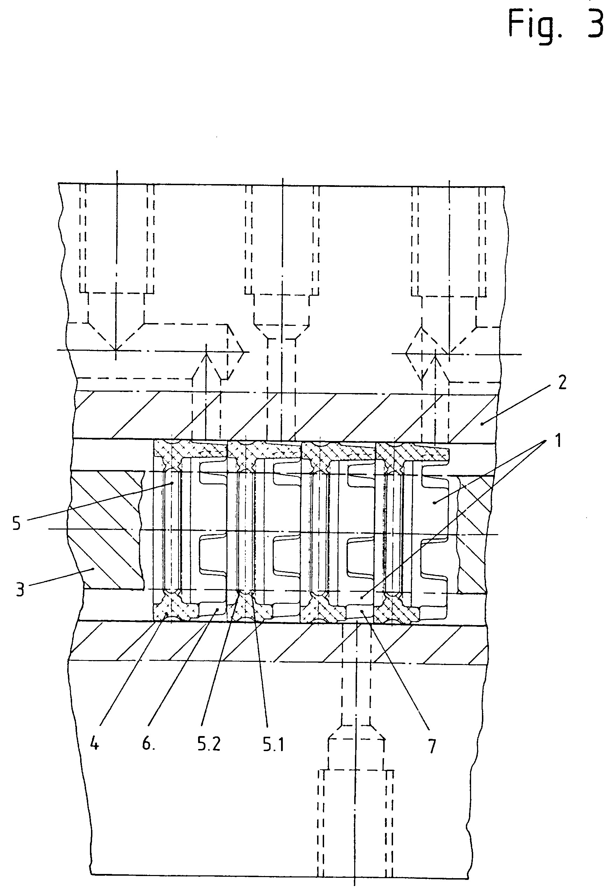

Die Schieberventildichtung 1 in den Figuren 1, 2, 3 und 4 umfaßt einen ersten Dichtteil 4 und einen zweiten Dichtteil 5, wobei der erste Dichtteil 4 als statische Dichtung ausgebildet ist und das Ventilgehäuse 2 abdichtet. Der zweite Dichtteil 5 wird während der bestimmungsgemäßen Verwendung dynamisch belastet. Er dichtet den axialbeweglichen Ventilschieber 3 ab. Der in diesen Ausführungsbeispielen in axialer Richtung einseitig vorstehende Kragen 6 ist in radialer Richtung durchbrochen, wobei die Duchbrechungen mit der Bezugsziffer 7 versehen sind. Die Durchbrechungen 7 gewährleisten eine Verbindung der Luftkanäle, die durch ein Verschieben des Ventilschiebers 3 bedarfsweise freigegeben werden. Der zweite Dichtteil 5 ist als dynamische, doppelwirkende Dichtung ausgebildet und weist in axialer Richtung zwei einander mit Abstand benachbarte Dichtlippen 5.1, 5.2 auf, die mit der Oberfläche des abzudichtenden Ventilschiebers 3 eine im wesentlichen trapezförmige Nut 5.3 begrenzen. Auch der erste Dichtteil 4 ist in diesem Ausführungsbeispiel doppeltwirkend ausgeführt und umfaßt ebenfalls zwei Dichtbereiche 4.1, 4.2, die zur besseren statischen Abdichtung ein im wesentlich rechteckig begrenztes Profil aufweisen.

Eine besonders einfache, in wirtschaftlicher Hinsicht kostengünstige Herstellbarkeit sowie eine einfache Montage ist dadurch gegeben, daß die Schieberventildichtung einstückig ausgebildet ist und gemäß den Figuren 1 bis 3 aus elastomerem Werkstoff besteht. Die axiale Fixierung mehrerer in axialer Richtung hintereinander angeordneter Schieberventildichtungen 1 erfolgt durch die Kragen 6. Die axiale Erstreckung der in axialer Richtung vorstehenden Kragen 6 ist von den jeweiligen Gegebenheiten des Anwendungsfalles abhängig und je nach Konstruktion variabel. Es ist von hervorzuhebender Bedeutung, daß durch die vollelastische Schieberventildichtung 1 radiale und axiale Toleranzen gut überbrückt und ausgeglichen werden können. Dadurch entfällt sowohl eine aufwendige Fertigung der Dichtringe, als auch der einzelnen Bauteile. Die einstückig ausgebildete Schieberventildichtung 1 erfüllt eine Vielzahl von Funktionen, so z.B. die statische und die dynamische Abdichtung, einen Ausgleich von radialen und axialen Toleranzen des Ventilgehäuses 2 und/oder des Ventilschiebers 3 sowie die axiale Festlegung der Dichtungen zueinander. Die Schieberventildichtungen 1 sind einfach und leicht montierbar und es ergeben sich insgesamt sowohl durch die Schieberventildichtung 1 selbst, als auch durch die großzügiger tolerierten, abzudichtenden Teile geringere Fertigungskosten.

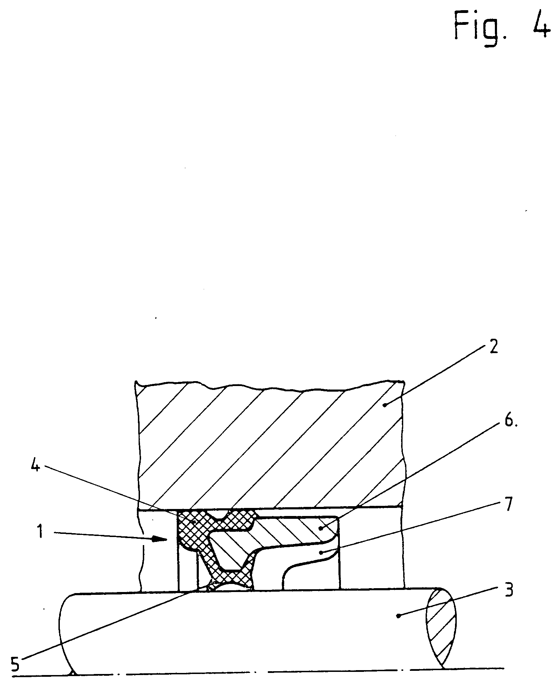

In Figur 4 ist ein weiteres Ausführungsbeispiel der erfindungsgemäßen Schieberventildichtung 1 gezeigt, wobei der erste und der zweite Dichtteil 4, 5 aus einem elastomeren Werkstoff bestehen und einstückig an einen Kragen 6 aus metallischen Werkstoff angeformt sind. Nach einer anderen Ausgestaltung kann der Kragen 6 aus einem duroplastischen oder thermoplastischen Werkstoff bestehen. Bei diesen Ausführungsformen ist von Vorteil, daß bei hohen, abzudichtenden Drücken durch den im Vergleich zu den Dichtteilen 4, 5 relativ steiferen Kragen 6 die axiale Ausdehnung des zweiten Dichtteils 5 reduziert werden kann, um höhere Durchflußwerte durch das Schieberventil zu erreichen.
Der in axialer Richtung vorstehende Kragen 6 begrenzt, wie auch im Ausführungsbeispiel Figur 1, jeweils ein Ringvolumen zwischen dem Ventilgehäuse 2 und dem Ventilschieber 3.

## Patentansprüche

1. Schieberventildichtung zur Abdichtung eines Ventilgehäuses gegenüber einem relativ axial beweglichen Ventilschieber, umfassend zumindest einen das Ventilgehäuse abdichtenden ersten Dichtteil, zumindest einen den Ventilschieber abdichtenden zweiten Dichtteil und zumindest einen in axialer Richtung vorstehenden Kragen, der in radialer Richtung durchbrochen ist, wobei zumindest zwei gleichartige Schieberventildichtungen axial hintereinander geschaltet und über den Kragen aufeinander abgestützt sind, dadurch gekennzeichnet, daß der erste Dichtteil (4), der zweite Dichtteil (5) und der Kragen (6) einstückig ineinander übergehend ausgebildet sind.

2. Schieberventildichtung nach Anspruch 1, dadurch gekennzeichnet, daß der erste Dichtteil (4), der zweite Dichtteil (5) und der Kragen (6) aus einem elastomeren Werkstoff bestehen.

3. Schieberventildichtung nach anspruch 1, dadurch gekennzeichnet, daß der erste Dichtteil (4) und der zweite Dichtteil (5) aus einem elastomeren Werkstoff bestehen und daß der Kragen (6) aus einem metallischen, thermoplastischen oder duroplastischen Werkstoff besteht.

4. Schieberventildichtung nach Anspruch 1 bis 3, dadurch gekennzeichnet, daß der zweite Dichtteil (5) zwei Dichtlippen (5.1, 5.2) aufweist, die in axialer Richtung mit Abstand voneinander benachbart sind und den Ventilschieber (1) unter radialer Vorspannung dichtend umschließen.

5. Schieberventildichtung nach Anspruch 4, dadurch gekennzeichnet, daß die Dichtlippen (5.1, 5.2) eine trapezförmige Nut (5.3) begrenzen, deren Seitenwandungen mit der abzudichtenden Fläche des Ventilschiebers (1) einen Winkel von 10 bis 60° einschließen.

6. Schieberventildichtung nach Anspruch 1 bis 3, dadurch gekennzeichnet, daß der zweite Dichtteil (5) einen Dichtwulst mit gerundetem Profil aufweist, der den Ventilschieber (1) unter radialer Vorspannung dichtend umschließt.

7. Schieberventildichtung nach Anspruch 1 bis 3, dadurch gekennzeichnet, daß der erste Dichtteil (4) zumindest zwei radial in Richtung des Ventilgehäuses (2) vorspringende Dichtbereiche (4.1, 4.2) aufweist, die einander axial mit Abstand benachbart zugeordnet sind und das Ventilgehäuse (2) während der bestimmungsgemäßen Verwendung dichtend berühren.

8. Schieberventildichtung nach Anspruch 7, dadurch gekennzeichnet, daß die Dichtbereiche (4.1, 4.2) ein im wesentlichen rechteckig begrenztes Profil aufweisen.
